# DEMANDE DE BREVET EUROPEEN

(11) **EP 2 072 775 A1**
(43) Date de publication de la demande: **24.06.2009**
(21) Numéro de dépôt: 08172183.9
(22) Date de dépôt: 18.12.2008
(51) Int. Cl.: F01N 7/08, B60R 13/08

(54) **Protecteur thermique d'une peau de pare-chocs à proximité d'un pot d'échappement**

(30) Priorité: 20.12.2007 FR 0760134
(71) Demandeur: Compagnie Plastic Omnium, 69007 Lyon (FR)
(72) Inventeur: Montanvert, Pierre, 69100 Villeurbanne (FR); Demange, Jean-Yves, 01500 Amberieu en Bugey (FR)
(74) Mandataire: Remy, Vincent Noel Paul

(57) **Abrégé**

Le protecteur thermique (10) comporte des moyens (15) de guidage du flux des gaz d'échappement vers l'extérieur du véhicule, destinés à empêcher le flux des gaz d'échappement de rencontrer la peau de pare-chocs (12), au moins une ouverture (28) destinée à autoriser le passage d'air entre la peau de pare-chocs (12) et les moyens de guidage du flux de gaz d'échappement, et des moyens (30) de déviation d'un flux d'air (F) vers l'ouverture (28).

## Description

La présente invention concerne un protecteur thermique d'une peau de pare-chocs à proximité d'un pot d'échappement.

On connaît dans l'état de la technique, notamment d'après DE 101 36 350, un enjoliveur pour pot d'échappement de véhicule automobile.

Un tel enjoliveur est destiné à être agencé sur le véhicule automobile, en aval du pot d'échappement, de façon à cacher le pot d'échappement et à apparaître de manière esthétique depuis l'extérieur de ce véhicule automobile.

Dans cet état de la technique, la peau de pare-chocs arrière du véhicule automobile présente une cavité ménagée en regard du pot d'échappement. Cette cavité comporte des bords recourbés et éventuellement chromés, de façon à former l'enjoliveur. Ainsi, l'enjoliveur est venu de matière avec la peau de pare-chocs.

Un tel enjoliveur réalise efficacement sa fonction esthétique.

Cet enjoliveur comporte en outre des moyens de guidage du flux des gaz d'échappement vers l'extérieur du véhicule, destinés à empêcher le flux des gaz d'échappement de rencontrer la peau de pare-chocs.

Toutefois, du fait de la proximité de l'enjoliveur avec le pot d'échappement, dont la température est relativement élevée, la chaleur de ce pot d'échappement est transmise à l'enjoliveur. Cette chaleur est également transmise par conduction thermique au reste de la peau de pare-chocs, par l'intermédiaire de l'enjoliveur.

Or, une peau de pare-chocs n'est habituellement pas conçue pour supporter une telle température. Ainsi, à cause de cette chaleur provenant du pot d'échappement, la peau de pare-chocs a tendance, à terme, à s'abîmer.

L'invention a notamment pour but de remédier à cet inconvénient, en proposant un protecteur thermique de la peau de pare-chocs permettant de mieux protéger cette peau de pare-chocs contre la chaleur du pot d'échappement.

A cet effet, l'invention a pour objet un protecteur thermique d'une peau de pare-chocs à proximité d'un pot d'échappement de véhicule automobile, caractérisé en ce qu'il comporte :
- des moyens de guidage du flux des gaz d'échappement vers l'extérieur du véhicule, destinés à empêcher le flux des gaz d'échappement de rencontrer la peau de pare-chocs,
- au moins une ouverture destinée à autoriser le passage d'air entre la peau de pare-chocs et les moyens de guidage du flux de gaz d'échappement, et
- des moyens de déviation d'un flux d'air vers l'ouverture.

Ainsi, lorsque le véhicule se déplace, une partie de l'air circulant sous le véhicule est déviée vers l'ouverture entre les moyens de guidage du flux de gaz d'échappement et la peau de pare-chocs. Cet air a pour effet d'évacuer les calories et constitue l'équivalent d'un écran thermique. II limite donc la transmission de chaleur entre le pot d'échappement et la peau de pare-chocs. On évite de cette manière une surchauffe de la peau de pare-chocs due à sa proximité avec le pot d'échappement.

Un protecteur thermique selon l'invention peut en outre comporter l'une ou plusieurs des caractéristiques suivantes :
- Les moyens de guidage du flux de gaz d'échappement comportent une paroi de guidage, destinée à entourer le pot d'échappement, l'ouverture étant ménagée sur le protecteur thermique de façon à autoriser le passage d'air entre la peau de pare-chocs et cette paroi de guidage.
- Le protecteur thermique comporte des moyens de fixation sur la peau de pare-chocs du véhicule automobile.
- La ou les ouvertures s'étendent le long de la périphérie du protecteur thermique, de façon à autoriser le passage de l'air de part et d'autre des moyens de guidage de flux de gaz d'échappement.
- Le protecteur thermique comporte une pluralité d'ouvertures réparties périphériquement sur le protecteur thermique.
- Les moyens de fixation comportent des moyens d'encliquetage du protecteur thermique sur la peau de pare-chocs.
- Le protecteur thermique est en matériau thermodurcissable, par exemple en SMC, ou en matériau thermoplastique résistant aux hautes températures, par exemple en polyamide.
- Le protecteur thermique comporte, en extrémité des moyens de guidage du flux de gaz d'échappement, un enjoliveur de pot d'échappement, de préférence chromé.

L'invention concerne également une pièce de carrosserie de véhicule automobile, caractérisé en ce qu'elle comporte une partie formant une peau de pare-chocs de véhicule automobile, et une partie formant un protecteur thermique tel que défini précédemment, venu de matière avec la partie formant peau de pare-chocs.

L'invention sera mieux comprise à la lecture de la description qui va suivre, donnée uniquement à titre d'exemple et faite en se référant aux dessins annexés dans lesquels :
- la figure 1 est une vue partielle en perspective d'un protecteur thermique d'une peau de pare-chocs selon un exemple de mode de réalisation de l'invention ;
- la figure 2 est une vue de section dans le plan II-II du protecteur thermique de la figure 1.

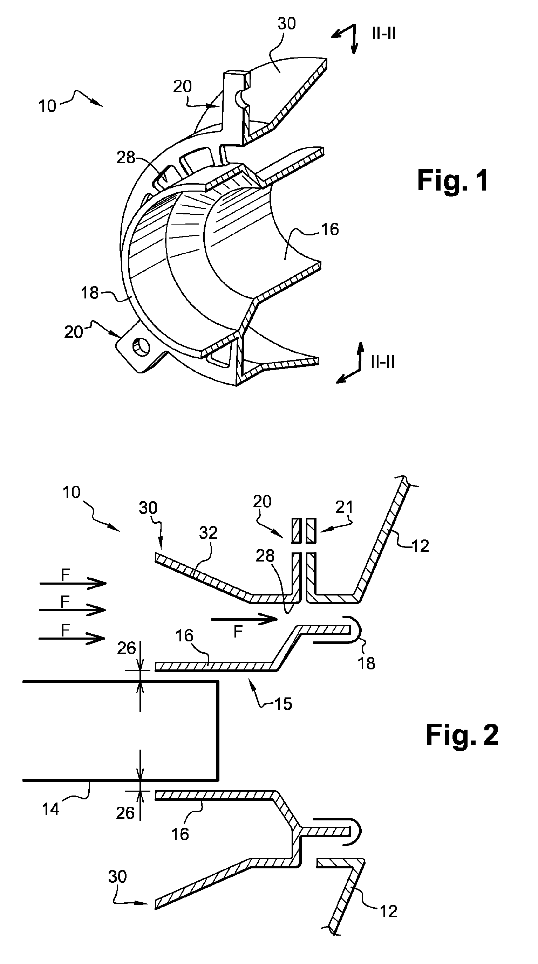

On a représenté sur les figures 1 et 2 un protecteur thermique 10 d'une peau de pare-chocs 12 arrière de véhicule automobile à proximité d'un pot d'échappement 14 du véhicule automobile.

Ce protecteur thermique 10 est de préférence en matériau thermodurcissable, par exemple en SMC, ou en matériaux thermoplastique résistant aux hautes températures, par exemple en polyamide, afin de présenter une bonne tenue à la chaleur.

Le protecteur thermique 10 comporte des moyens 15 de guidage du flux des gaz d'échappement vers l'extérieur du véhicule, destinés à empêcher ce flux des gaz d'échappement de rencontrer la peau de pare-chocs 12. Ces moyens de guidage 15 comportent une paroi de guidage 16 circonférentielle.

Cette paroi de guidage 16 est destinée à entourer le pot d'échappement 14 et à s'étendre dans la direction longitudinale du véhicule automobile, jusqu'à affleurement selon la direction longitudinale avec la peau de pare-chocs 12, afin que le flux de gaz d'échappement soit guidé jusqu'en dehors du véhicule automobile sans rencontrer la peau de pare-chocs 12.

De préférence, la paroi de guidage 16 comporte, à son extrémité affleurant la peau de pare-chocs 12, un enjoliveur 18, par exemple chromé. Dans l'exemple décrit, l'enjoliveur 18 est un élément rapporté sur la paroi 16.

Le protecteur thermique 10 comporte des moyens 20 de fixation sur la peau de pare-chocs 12, destinés à coopérer avec des moyens complémentaires 21 agencés sur la peau de pare-chocs. Par exemple, les moyens 20 de fixation comportent des moyens d'encliquetage (male ou femelle, un orifice de passage d'une vis, ou une surface de collage.

Les moyens de fixation 20 sont destinés à maintenir le protecteur thermique 10 de façon que sa paroi de guidage 16 entoure le pot d'échappement 14 avec un jeu circonférentiel 26. Ce jeu circonférentiel 26 permet d'éviter un contact direct entre le pot d'échappement 14, dégageant une forte chaleur, et le protecteur thermique 10.

Afin d'autoriser le passage d'un flux d'air F entre la paroi de guidage 16 et la peau de pare-chocs 12, le protecteur thermique 10 comporte au moins une ouverture 28, de préférence une pluralité d'ouvertures 28 réparties périphériquement sur le protecteur thermique 10, afin d'autoriser le passage de l'air autour de la paroi de guidage 16.

Un tel flux d'air F est généré par le déplacement du véhicule automobile. Grâce à ce flux d'air, de température très inférieure à la température du pot d'échappement 14 et des gaz d'échappement, la chaleur se propage plus difficilement depuis le pot d'échappement 14 jusqu'à la peau de pare-chocs 12. Ce flux d'air forme donc un écran thermique, diminuant les risques que la température de la peau de pare-chocs 12 augmente jusqu'à endommager cette peau 12.

De préférence, le protecteur thermique 10 comporte des moyens 30 de déviation du flux d'air F vers les ouvertures 28. Par exemple, les moyens 30 comportent au moins une paroi 32 circonférentielle, convergeant vers les ouvertures 28. De tels moyens de déviation 30 optimisent le passage d'air dans les ouvertures 28, afin d'optimiser l'efficacité de l'écran thermique généré.

On notera enfin que l'invention n'est pas limitée au mode de réalisation précédemment décrit, et pourrait comporter des variantes sans sortir de la portée des revendications.

Par exemple, le protecteur thermique et l'enjoliveur, ou le protecteur thermique et la peau de pare-chocs, pourraient être venus de matière.

Dans ce dernier cas, le protecteur thermique et la peau de pare-chocs formeraient ensemble une pièce de carrosserie de véhicule automobile, comportant une partie formant la peau de pare-chocs, et une partie formant le protecteur. De préférence, une telle pièce de carrosserie serait en matériau thermodurcissable afin de présenter une bonne résistance à la chaleur.

## Revendications

1. Protecteur thermique (10) d'une peau de pare-chocs (12) à proximité d'un pot d'échappement (14) de véhicule automobile, **caractérisé en ce qu'**il comporte :
- des moyens (15) de guidage du flux des gaz d'échappement vers l'extérieur du véhicule, destinés à empêcher le flux des gaz d'échappement de rencontrer la peau de pare-chocs (12),
- au moins une ouverture (28) destinée à autoriser le passage d'air entre la peau de pare-chocs (12) et les moyens de guidage du flux de gaz d'échappement, et
- des moyens (30) de déviation d'un flux d'air (F) vers l'ouverture (28).

2. Protecteur thermique (10) selon la revendication 1, dans lequel les moyens de guidage du flux de gaz d'échappement comportent une paroi de guidage (16), destinée à entourer le pot d'échappement (14), l'ouverture (28) étant ménagée sur le protecteur thermique de façon à autoriser le passage d'air entre la peau de pare-chocs (12) et cette paroi de guidage (16).

3. Protecteur thermique selon la revendication 1 ou 2, comportant des moyens (20) de fixation sur la peau de pare-chocs (12) du véhicule automobile.

4. Protecteur thermique (10) selon l'une quelconque des revendications 1 à 3, dans lequel la ou les ouvertures (28) s'étendent le long de la périphérie du protecteur thermique (10), de façon à autoriser le passage de l'air de part et d'autre des moyens de guidage de flux de gaz d'échappement.

5. Protecteur thermique (10) selon la revendication 4, comportant une pluralité d'ouvertures (28) réparties périphériquement sur le protecteur thermique (10).

6. Protecteur thermique (10) selon l'une quelconque des revendications précédentes, dans lequel les moyens de fixation (20) comportent des moyens d'encliquetage du protecteur thermique (10) sur la peau de pare-chocs (12).

7. Protecteur thermique (10) selon l'une quelconque des revendications précédentes, en matériau thermodurcissable, par exemple en SMC ou en matériaux thermoplastique résistant aux hautes températures, par exemple en polyamide.

8. Protecteur thermique (10) selon l'une quelconque des revendications précédente, comportant, en extrémité des moyens (15) de guidage du flux de gaz d'échappement, un enjoliveur (18) de pot d'échappement, de préférence chromé.

9. Pièce de carrosserie de véhicule automobile, **caractérisé en ce qu'**elle comporte une partie formant peau de pare-chocs de véhicule automobile, et une partie formant un protecteur thermique selon l'une quelconque des revendications 1 à 8, venu de matière avec la partie formant peau de pare-chocs.
